# EUROPÄISCHE PATENTANMELDUNG

(11) **EP 0 938 883 A2**
(43) Veröffentlichungstag der Anmeldung: **01.09.1999**
(21) Anmeldenummer: 99103536.1
(22) Anmeldetag: 24.02.1999
(51) Int. Cl.: A61G 3/06

(54) **Fahrzeug zur Personenbeförderung**

(30) Priorität: 25.02.1998 DE 19807676
(71) Anmelder: Sachsenring Entwicklungsgesellschaft mbH, 08058 Zwickau (DE)
(72) Erfinder: Rabe, Jürgen, 91315 Höchstadt (DE)
(74) Vertreter: Rumrich, Gabriele

(57) **Zusammenfassung**

Die Erfindung betrifft ein Fahrzeug zur Personenbeförderung, mit einer zur Fahrtrichtung rechtwinklig angeordneten Trennwand zwischen Fahrer-/Beifahrersitz und den Rücksitzen. Erfindungsgemäß weist das Fahrzeug
- eine Rampe (2) zum Einfahren eines Rollstuhles (3) auf, wobei die Rampe (2) aus einer Unterbringungsposition in eine Gebrauchsposition bringbar ist derart, daß sie ein Einfahren des Rollstuhlfahrers durch die hintere Seitentür des Fahrzeuges gewährleistet, wobei der Rollstuhl (3) bedarfsweise so in seiner Lage und/oder Sitzhöhe veränderbar ist, daß ein beguemes Sitzen während der Fahrt in einem Winkel von im wesentlichen 90° zur Fahrtrichtung gewährleistet wird und/oder
- mindestens einen mit Gurten versehenen umklappbaren in einem Klappsitz angeordneten Kindersitz auf, wobei der Klappsitz entgegen der Fahrtrichtung an der Trennwand (6) angeordnet ist und/oder
- einen Beifahrersitz (8) auf, der zwischen einer Sitzposition, die geeignet ist, einen Fahrgast aufzunehmen und einer Beladeposition veränderbar ist, so daß im Beifahrerbereich ein Stauraum zum Beladen erzeugt wird, wobei der Stauraum bedarfsweise mit einer Abdeckung, z.B. in Form einer Plane (12) versehbar ist.

## Beschreibung

Die Erfindung betrifft ein Fahrzeug zur Personenbeförderung, welches eine zur Fahrtrichtung rechtwinklig angeordnete Trennwand zwischen Fahrer-/Beifahrersitz und den Rücksitzen aufweist, wobei die Trennwand mit einer höhenverstellbaren Scheibe versehbar ist.
Dazu sind bereits zahlreiche Lösungen bekannt, wobei in den englischen Taxis zusätzlich an der Trennwand zwei Klappsitze angeordnet sind, auf welchen die Fahrgäste entgegen der Fahrtrichtung plaziert werden können. Nachteilig ist dabei, daß kein Gurtsystem für die Fahrgäste, die diese Klappsitze nutzen, vorgesehen ist und daß die Mitnahme von kleinen Personen, insbesondere Kleinkindern ohne Kindersitz problematisch ist. Dazu kommt die Gefährdung der Kinder bei Unfallgefahr durch die ungenügende Sicherheit. Ein im Rücksitz integrierter Kindersitz ist bereits bekannt, dieser wird durch Umklappen des in der Rückenlehne enthaltenen Sitzkissens in Funktionsstellung gebracht. Das Kind sitzt jedoch noch immer in Fahrtrichtung, wodurch bekannterweise bei Unfällen eine erhöhte Gefährdung besteht.
Es sind weiterhin Fahrzeuge für die Personenbeförderung bekannt, die eine Rampe aufweisen, die geeignet ist, einen Rollstuhlfahrer aus eigener Kraft in das Fahrzeug fahren zu lassen.

Eine Rampe für einen Türeinstieg beschreibt DE 41 34 559, wobei eine Plattform eine Trageinrichtung aufweist und die Trageinrichtung in einen unterhalb der Türschwellenstufe liegendem Unterbringungsraum angeordnet ist und von dort aus in die Gebrauchsstellung bringbar ist. Die Trageinrichtung umfaßt eine Hebeeinrichtung, mit der die sich an die Außenseite der Türschwellenstufe anschließende Plattenfläche der Rampe bis etwa auf die Höhe der Türschwellenoberkante anhebbar ist, wodurch sich ein im wesentlichen stufenfreier Übergang zwischen Türschwelle und Rampe ergibt. Nachteil dieser Lösung ist, daß in Richtung zum Fahrgastraum bei einer Anordnung an der Seitentür eines PKW von der Schwelle zum Boden des Fahrzeuges ein relativ großer Absatz vorhanden ist, der ein selbsttätiges Herausfahren des Rollstuhlfahrers behindert. In EP 0 252 655 A2 wird ein Fahrzeug zur Personenbeförderung beschrieben, bei welchem ebenfalls an den Türschweller der Beifahrertür eine Rampe in Form zweier zusammenklappbarer Schienen angelegt wird. Die Schienen werden nach dem Zusammenklappen in der Seitentasche der Tür verstaut. GB 2 276 592 A schlägt eine Rampe in Form von zwei teleskopartig verlängerbaren Schienen vor, die in Nichtgebrauchsstellung in Aussparungen im Bodenbereich des Kraftfahrzeuge unterbringbar ist. Eine Lösung, bei welcher ein Rollstuhl ebenfalls über zwei Schienen in ein Fahrzeug gelangen kann, wird in GB PS 370.353 beschrieben. Die Rampe wird unter dem Boden des Fahrzeuges verstaut.
Alle diese Lösungen sind relativ aufwendig und nicht einfach genug handhabbar. Es besteht weiterhin bei den Lösungen, die ein Verstauen der Rampe im Bodenbereich erfordern, der Nachteil, daß die Rahmenstruktur des Fahrzeuges im Bodenbereich verändert werden muß.

Der Erfindung liegt die Aufgabe zugrunde, ein neues Konzept eines Fahrzeuges zu entwickeln, das einen sicheren Transport aller Fahrgäste, insbesondere von kleineren Kindern und behinderten Personen gewährleistet und es gleichzeitig gestattet, bedarfsweise einen Rollstuhlfahrer über eine einfach ein die Gebrauchsstellung bringbare Rampe aus eigener Kraft in das Fahrzeug über eine hintere Seitentüre fahren zu lassen.

Das Fahrzeug zur Personenbeförderung weist eine zur Fahrtrichtung rechtwinklig angeordnete Trennwand zwischen Fahrer-/Beifahrersitz und den Rücksitzen auf, wobei die Trennwand mit einer höhenverstellbaren Scheibe versehbar ist, und an der Trennwand entgegen der Fahrtrichtung zwei Klappsitze angeordnet sind. Erfindungsgemäß ist in dem entgegen zur Fahrtrichtung angeordneten Klappsitz ein wiederum klappbarer Kindersitz mit einem zuverlässigen Gurtsystem angeordnet. Somit wird eine hohe Sicherheit für Kleinkinder während der Fahrt gewährleistet.
Der Beifahrersitz kann zwischen einer Sitzposition, die geeignet ist, einen Fahrgast aufzunehmen und einer Beladeposition, in welcher der Beifahrersitz unter dem Armaturenbrett der Beifahrerseite verstaubar ist, verändert werden, so daß im Beifahrerbereich ein Stauraum zum Beladen erzeugt wird.
Die Sitzfläche des Beifahrersitzes ist in Richtung zur Rückenlehne nach oben klappbar und der gesamte Sitz kann nach dem Hochklappen des Sitzbereiches in einer dafür geeigneten Laufschiene unter das Armaturenbrett geschoben und in dieser Position arretiert werden. Eine weitere Ausführungsvariante besteht darin, die Rückenlehne des Beifahrersitzes in Richtung zur Sitzfläche umzuklappen, so daß sie bündig daran anliegt. Anschließend wird der Sitz in einer in Fahrtrichtung im Bodenbereich angeordneten Schwenkachse in Richtung zum Armaturenbrett geschwenkt und bedarfsweise nach vorn geschoben (z. B. ebenfalls in Schienen) bis er am Armaturenbrett anliegt und in dieser Position unter dem Armaturenbrett arretiert wird.
Der Stauraum kann bedarfsweise mit einer Abdeckung versehen werden, so daß das Beladungsgut verdeckt ist.
Die Abdeckung des Stauraums kann durch eine Plane erfolgen, die mit einem Ende an der Trennwand und mit dem gegenüberliegenden Ende z.B. entgegen der Kraft einer Rückstellfeder aus ihrer Ausgangsposition an dem unter dem Armaturenbrett verstauten Sitz befestigbar ist, so daß die Plane nach dem Lösen der Befestigung am Armaturenbrett selbsttätig durch die Rückstellfeder in die Ausgangsposition zurück gelangt.

Weiterhin kann an dem Fahrzeug eine Rampe zum Einfahren eines Rollstuhles vorgesehen werden, die aus einer Unterbringungsposition in eine Gebrauchsposition bringbar ist, so daß sie ein weitestgehend selbsttätiges Einfahren des Rollstuhlfahrers durch die hintere Seitentür des Fahrzeuges gewährleistet.

Die Rampe ist beispielsweise von einer Unterbringungsposition unter dem Unterboden ausfahrbar und der Höhenunterschied von der Austrittsposition der Rampe am Fahrzeug bis zur Oberkante der Schwelle der Seitentür durch geeignete Mittel ausgleichbar.
Dazu kann beispielsweise eine Hubeinrichtung vorgesehen sein, die pneumatisch, hydraulisch, elektrisch oder manuell betätigt wird.
Es kann jedoch auch über die Schwelle eine Ausgleichsschiene greifen, die einerseits bis zur Rampe und andererseits bis zum Boden des Fahrgastinnenraumes reicht. Weiterhin ist es möglich, die Rampe im Fahrzeuginnenraum unterzubringen und bedarfsweise an die Schwelle anzulegen. Dazu kann die Rampe im Bodenbereich integriert und über ein Schienensystem ausfahrbar sowie teleskopartig in ihrer Länge veränderbar sein.
Eine weitere vorteilhafte Ausführungsform besteht darin, daß die Rampe in Form von zwei teleskopartig in der Länge veränderbaren Schienen ausgebildet ist, die entsprechend der Spurweite des Rollstuhls an die Schwelle angelegt und positioniert werden. Auch bei diesen Ausführungsvarianten ist es angebracht, in Richtung zum Fahrgastraum den Höhenunterschied auszugleichen, wenn ein solcher vorhanden ist. Das kann ebenfalls durch eine Ausgleichsschiene, die an der Rampe befestigt oder separat ausgebildet sein kann, oder durch einen Ausgleichskeil erfolgen.
Der Rollstuhl sollte weiterhin während der Fahrt im Fahrzeug positionierbar sein. Der Rollstuhlfahrer wird durch im hinteren Raum des Fahrzeuges angeordnete Airbags geschützt. Diese können beispielsweise in die Trennwand integriert werden.

Die Erfindung stellt insgesamt ein neues Gesamtkonzept eines Fahrzeuges dar, welches insbesondere für den Taxibetrieb geeignet ist. Es kann zusätzlich zum Fahrer eine Familie mit drei Erwachsenen und zwei kleineren Kindern problemlos untergebracht werden, wobei die Kinder entgegen der Fahrtrichtung sicher plaziert sind, die Eltern ihren Kindern gegenüber sitzen und somit ihre Kinder immer beaufsichtigen. Es können weiterhin Rollstuhlfahrer beim Einfahren durch die hintere Seitentüre im Rollstuhl sitzen bleiben und aus eigener Kraft in das Fahrzeug fahren, wobei sie während der Fahrt in einem Winkel von 90° zur Fahrtrichtung sitzen. Neben dem Einsatz als Taxi ist das Fahrzeug auch für größere Familien und für Behinderte geeignet.

Die Erfindung wird nachfolgend anhand von Ausführungsbeispielen näher erläutert.

Es zeigen:
- Fig. 1:: Fahrzeug mit geöffneter hinterer Seitentür, angelegter Rampe und eingefahrenem und 90° zur Fahrtrichtung stehendem Rollstuhl.
- Fig. 2a:: Beifahrersitz in Sitzposition
- Fig. 2b:: Beifahrersitz mit auf den Sitz geklappter Lehne
- Fig. 2c:: Beifahrersitz insgesamt nach oben geschwenkt und unter das Armaturenbrett geschoben.
- Fig. 3:: Beifahrersitz in der Position wie Fig. 1b unter das Armaturenbrett geschoben und Stauraum mit Gepäck beladen sowie mit einer Abdeckung
- Fig. 4a:: Beifahrersitz, bei welchem Lehne und Sitz getrennt ausgebildet sind in Sitzposition
- Fig. 4b:: Beifahrersitz, bei welchem Lehne und Sitz getrennt ausgebildet sind, mit an die Trennwand geklappter Lehne und unter das Armaturenbrett geschobenem Sitz
- Fig. 5:: Beifahrersitz, mit unter das Armaturenbrett geschobenem und schräggestelltem Sitz, mit einem Koffer im Stauraum, und mit einer Abdeckung
- Fig. 6:: Schweller des Fahrzeuges mit angelegter Rampe in Teleskopausführung
- Fig. 7:: Zweigeteilte Rampe aus zwei Teleskopschienen während des Ausklappens in Seitenansicht des Fahrzeuges
- Fig. 8:: Zweigeteilte Rampe in Funktionsstellung
- Fig. 9:: Variante einer Rampe aus zwei Teleskopschienen mit Ausgleichsschiene zum Fahrzeugboden in Gebrauchsposition
- Fig. 10:: Rampe gem. Fig. 9 während des Verstauens
- Fig. 11:: Rampe gem. Fig. 9 in Unterbringungsposition
- Fig. 12:: Schnitt A-A gem. Fig. 11
- Fig. 13:: Rampe aus Sicht des Fahrgastraumes in Unterbringungsposition
- Fig. 14:: An der Trennwand in Richtung zu den hinteren Sitzen ausklappbarer Tisch in ausgeklappter Position
- Fig. 15:: Dreidimensionale Darstellung gern. Fig. 9

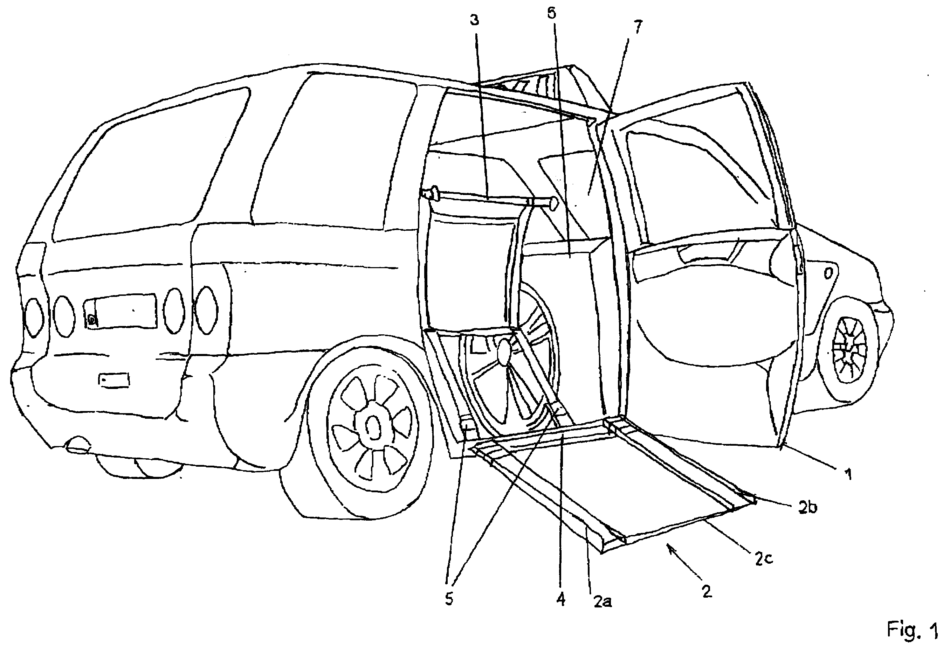

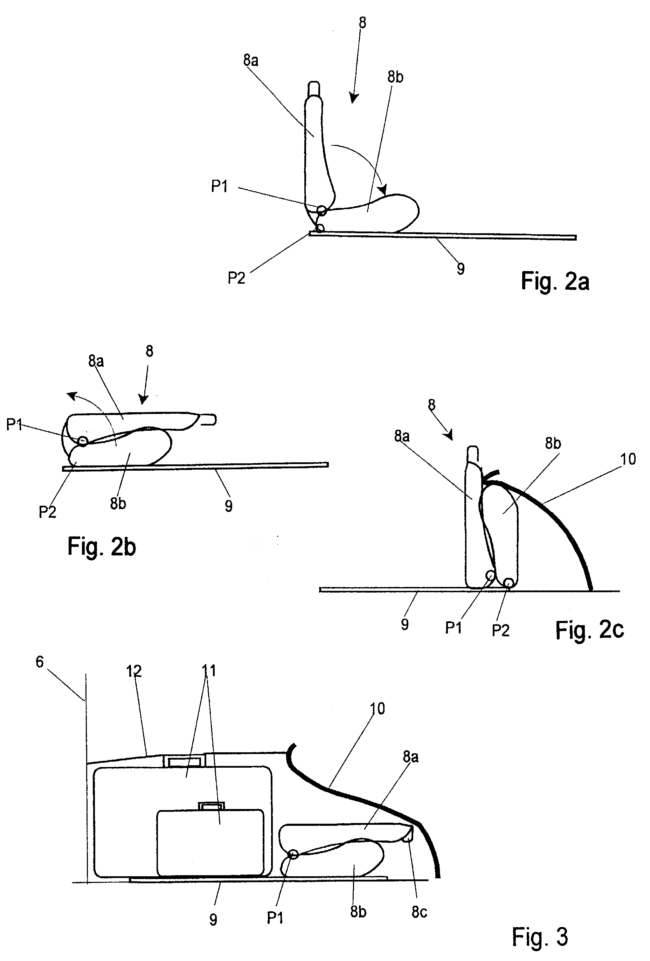

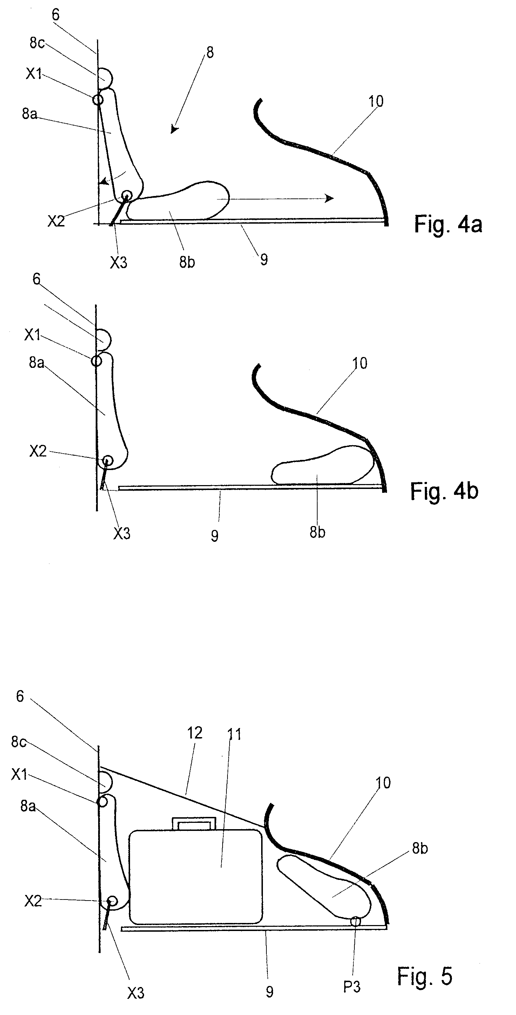

Ein Fahrzeug mit geöffneter hinterer Seitentür 1, angelegter Rampe 2 und eingefahrenem und 90° zur Fahrtrichtung stehendem Rollstuhl 3 ist in Fig. 1 dargestellt. Die Rampe 2 besteht aus zwei Schienen 2a, 2b, die an den Schweller 4 der hinteren Seitentür angelegt werden. Zur Stabilisierung sind beide Schienen 2a und 2b über eine Strebe 2c miteinander verbunden. Die Schienen 2a und 2b werden nach Gebrauch entfernt und z.B. im Kofferraum des Fahrzeuges verstaut. Der Rollstuhl 3 wurde mit Befestigungsmitteln 5 in Form von Gurten im Fahrzeug positioniert und steht im Winkel von 90° zur Fahrtrichtung. In dieser Lage sitzt die im Rollstuhl befindliche Person auch während der Fahrt. Der Rollstuhlfahrer kann über die Schienen 2a, 2b der Rampe 2 selbständig und ohne fremde Hilfe in das Fahrzeug und aus diesem heraus fahren.
Neben der Fixierung des Rollstuhls mittels Gurten sind auch zahlreiche andere Varianten möglich, z.B. können gemäß nicht dargestellter Ausführungsbeispiele die Räder mit Befestigungsmitteln arretiert werden. Hinter dem Fahrer-/ Beifahrersitz befindet sich rechtwinklig zur Fahrtrichtung eine Trennwand 6. Diese ist mit einer versenkbaren Scheibe 7 versehen. In der Trennwand 6 kann zur Sicherung des Rollstuhlfahrers bei Unfällen ein Airbag angeordnet sein.
Verschiedene Varianten zum Verstauen des Beifahrersitzes zum Schaffen eines Stauraums für Gepäck sind in Fig. 2 bis 5 dargestellt. Fig. 2a zeigt den Beifahrersitz 8 in Sitzposition. Die Lehne 8a wird nun um den Drehpunkt P1 in Pfeilrichtung nach vorn auf den Sitz 8b geschwenkt. In dieser Position gern. Fig. 2b wird der Sitz 8b mit der darauf befindlichen Lehne 8a um den Drehpunkt P2 nach oben geschwenkt und über zwei im Bodenbereich angeordnete Schienen 9 nach vorn unter das in der Zeichnung angedeutete Armaturenbrett 10 geschoben. Diese Position zeigt Fig. 2c. Eine weitere Ausführungsvariante, bei welcher der Sitz 8 in der Lage nach Fig. 2b mit lediglich heruntergeklappter Lehne 8a unter das Armaturenbrett 10 geschoben wurde ist in Fig. 3 dargestellt, in welcher auch gezeigt wird, daß der so entstandene Stauraum mit Gepäckstücken 11 beladen wurde. In diesem Beispiel wurde zusätzlich die Kopfstütze 8c nach unten geklappt. Um die Gepäckstücke 11 bei einem unbeaufsichtigtem Fahrzeug dem Sichtbereich zu entziehen, wurde eine Plane 12 darüber gespannt, die zum einen an der Trennwand 6 und zum anderen am Armaturenbrett 10 befestigt wurde.
Eine alternative, nicht dargestellte Variante kann darin bestehen, den Sitz in Richtung zur Lehne nach oben zu klappen, so daß der Sitz an der Lehne anliegt, und den gesamten Sitz nun nach vorn in Richtung zum Armaturenbrett zu schieben.
Einen Beifahrersitz, bei welchem Lehne 8a und Sitz 8b getrennt ausgebildet sind, zeigen Fig. 4a, Fig. 4b und Fig. 5. Die Sitzposition (Ausgangsstellung) ist in Fig. 4a dargestellt. Die Lehne 8a ist unabhängig vom Sitz 8b im Fahrzeug an einer oberen Position X1 an der Trennwand 6 und an einer unteren Position X2 über Befestigungsmittel X3 im Bodenbereich oder ebenfalls an der Trennwand 6 befestigt und vorzugsweise in der Schräglage verstellbar. Der Sitz 8b kann gem. Fig. 4b separat nach vorn unter das Armaturenbrett 10 geschoben werden. Die Lehne 8a wird weitmöglichst an die Trennwand 6 geklappt, so daß ebenfalls ein Stauraum zur Verfügung gestellt wird.
Eine Variante, ähnlich wie Fig. 4a zeigt. Fig. 5, dabei wurde der Sitz 8b unter dem Armaturenbrett 10 um den Drehpunkt P3 nach oben geklappt und der Stauraum mit Gepäck 11 beladen. Es ist ebenfalls eine Abdeckung 12 vorgesehen, die von der Trennwand 6 zum Armaturenbrett 10 reicht.
Neben den beschriebenen Ausführungsvarianten zum Verstauen des Beifahrersitzes unter dem Armaturenbrett sind auch andere Varianten möglich.
Weiterhin kann auch gemäß einer weiteren nicht dargestellten Variante als Beifahrersitz ein Klappsitz verwendet werden, dessen Sitzfläche in der Beladungsposition zum Erzeugen des Stauraums nach oben geklappt ist.

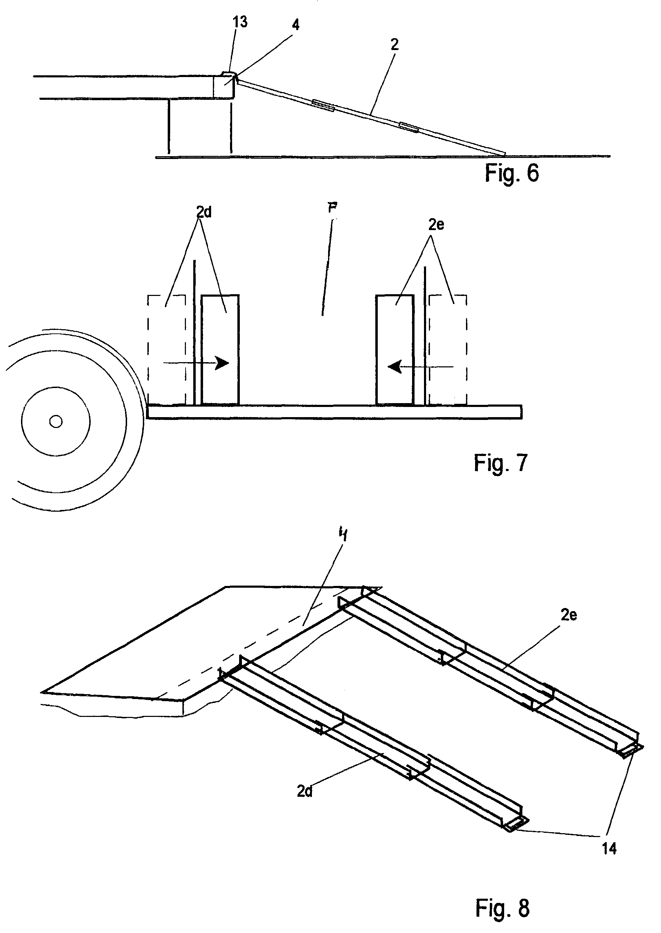

Eine an den Schweller 13 angelegte Rampe 2 in Teleskopausführung ist in Fig. 6 dargestellt.
Die Rampe ist oben am Schweller 4 mit Befestigungsmitteln 13 befestigt. Von der Rampe 2 zum Schweller 4 ist ein möglichst absatzloser Übergang zu gewährleisten.
Eine zweigeteilte Rampe aus zwei Teleskopschienen 2d, 2e ist in Fig. 7 dargestellt. In Nichtgebrauchsstellung sind die Teleskopschienen 2d, 2e auf die kleinste Länge zusammengeschoben und befinden sich gern. der gestrichelten Darstellung hinter Karosserieteilen im Fahrzeuginnenraum.
Sie werden nach Öffnen der Tür in Pfeilrichtung (s. Fig. 7) in die Türöffnung F geschoben (vorzugsweise Ober Schienen im Bodenbereich) und anschließend nach außen geklappt und ausgezogen und somit in die Gebrauchsstellung überführt (Fig. 8). An den vom Fahrzeug wegweisenden Enden befinden sich Griffelemente 14 zum Ausziehen und Zusammenschieben der Teleskopschienen 2d, 2e.

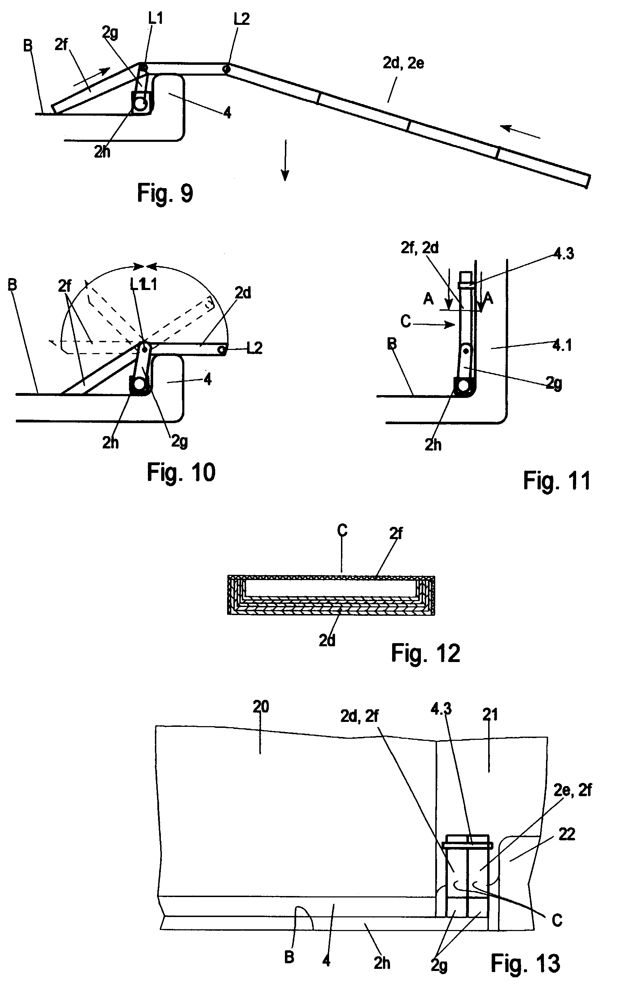

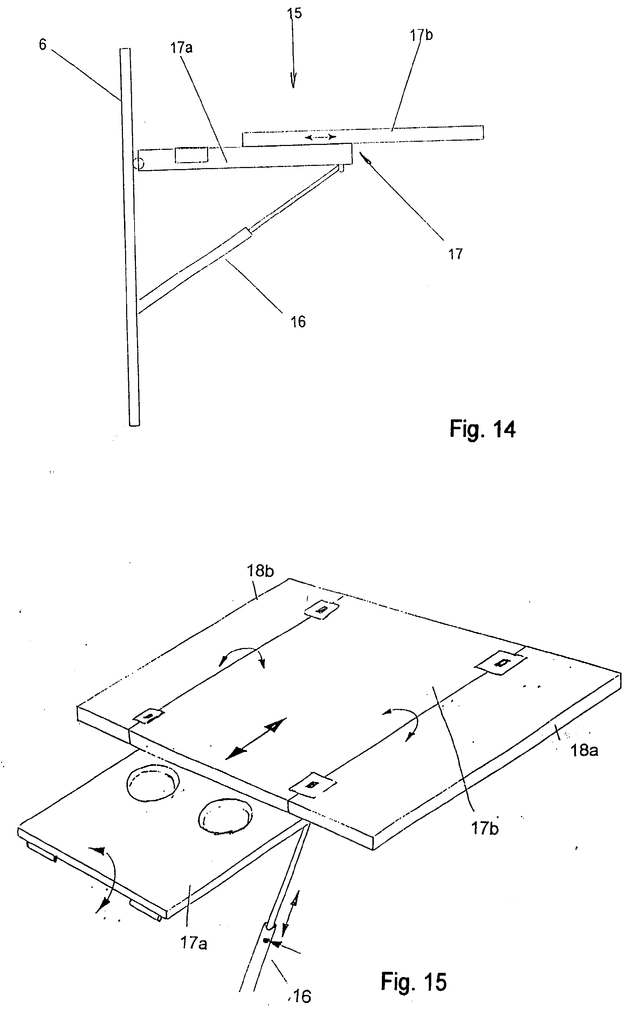

Fig. 9 zeigt eine Fahrzeugausführung, bei welcher durch den Schweller 4 ein Absatz im Türbereich gebildet wird und die Teleskopschienen 2d, 2e ausgezogen sind. Zusätzlich befindet sich zum Ausgleich des Höhenunterschiedes von der Oberkante des Schwellers 4 zum Boden B des Innenraumes des Fahrzeuges jeweils eine Ausgleichsschiene 2f. Die Ausgleichsschienen 2f und die Teleskopschienen 2d und 2e sind an einem Arm 2g schwenkbar um den Drehpunkt L1 gelagert, der wiederum in der parallel zum Schweller 4 verlaufenden Führungsschiene 2h verschiebbar ist. Das am Arm 2g angeordnete Element der Teleskopschiene 2d, 2e, weist an seinem anderen Ende einen Drehpunkt L2 auf, der es gestattet, die sich anschließenden Elemente der Teleskopschiene 2d bzw. 2e wie dargestellt nach unten zu schwenken. Das am Arm 2g befestigte Element der Teleskopschienen 2d und 2e liegt auf dem Schweller 4 sicher auf.
Um von der Gebrauchsposition gem. Fig. 9 in die Unterbringungsposition gem. Fig. 11 zu gelangen, werden die Teleskopschienen 2d, 2e auf die kleinste Länge zusammengeschoben (Fig. 10). Anschließend werden die Ausgleichsschiene 2f und die Teleskopschiene 2d bzw. 2e um den Drehpunkt L1 nach oben geschwenkt und ineinandergeschoben, so daß die Seitenschenkel der Ausgleichsschiene die Seitenschenkel der Teleskopschiene 2d bzw. 2e umfassen oder umgekehrt. Nun werden beide mit dem Arm 2g in der Führungsschiene 2h aus dem Türöffnungsbereich weg gem. Fig. 11 und 13 hinter die innere Seitenwand 4.1 geschoben und dort mittels Sicherungselement 4.3 in dieser Lage positioniert.
In Fig. 12 ist der Schnitt A-A gem. Fig. 11 dargestellt. Das U-Profil der Aussgleichsschiene ist dabei um 180° gedreht im Vergleich zum U-Profil der Teleskopschiene angeordnet, so daß die zueinander parallelen ineinandergreifenden Seitenschenkel der Teleskopschiene 2d, 2e durch die Ausgleichsschiene 2f verdeckt werden. In Richtung zum Fahrgastraum ergibt sich damit eine ebene Abschlußfläche C. Fig. 13 zeigt eine Unterbringungsposition aus Richtung Fahrgastraum. Die Fahrzeugtür 20 ist geschlossen, vor dem Schweller 4 befindet sich die Führungsschiene 2h. an der sich von der Tür 20 in Richtung zur Rückbank 22 erstreckenden Wand 21 wurden nebeneinander beide Teleskopschienen 2d, 2e und die zugehörigen Ausgleichsschiehen 2f positioniert. Die Befestigung erfolgt über Sicherungselemente 4.3.

Zur Verbesserung des Komforts ist im hinteren Fahrgastraum vorgesehen, einen Tisch entweder ausklappbar in den Sitzen zu integrieren oder an der Trennwand zu befestigen. Ein Ausführungsbeispiel mit einem an der Trennwand klappbar befestigtem Tisch in Gebrauchsstellung zeigt Fig. 14. Der Tisch 15 ist gelenkig mit der Trennwand 6 verbunden und kann über eine Gasfeder 16 in Funktionsstellung überführt werden. Die Tischplatte 17 weist zwei Ebenen 17a und 17b auf, die zueinander verschiebbar sind. Die dreidimensionale Darstellung des in Funktionsstellung befindlichen Tisches zeigt Fig. 15. Die oben liegende Ebene 17b weist zusätzlich Möglichkeiten zur Vergrößerung der Tischfläche in Form von zwei weiteren ausklappbaren Flächen 18 auf.

Das neue Fahrzeugkonzept schafft in seiner Gesamtheit eine flexible Einsatzmöglichkeit z.B. als Taxi oder auch für größere Familien und Behinderte.
Es wird erstmalig möglich, einen Rollstuhlfahrer durch die Seitentür eines Fahrzeuges, welches die Größe eines PKW's aufweist, in dieses fahren zu lassen und in einem Winkel von 90° zur Fahrtrichtung zu transportieren. Zusätzlich ist es durch die neuartige erfindungsgemäße Gestaltung des hinteren Sitzbereiches in Verbindung mit dem Gesamtkonzept erstmalig möglich, in einem Fahrzeug in der Größe eines PKW's neben einem Rollstuhlfahrer weitere Personen zu transportieren.

## Patentansprüche

1. Fahrzeug zur Personenbeförderung, welches eine zur Fahrtrichtung rechtwinklig angeordnete Trennwand zwischen Fahrer-/Beifahrersitz und den Rücksitzen aufweist, wobei die Trennwand mit einer höhenverstellbaren Scheibe versehbar ist, die bei Bedarf versenkbar ausgebildet sein kann, und an der Trennwand entgegen der Fahrtrichtung zwei, in Nichtgebrauchsstellung mit der Sitzfläche nach oben klappbare Klappsitze angeordnet sind,
**durch gekennzeichnet,**
- daß eine Rampe zum Einfahren eines Rollstuhles anbringbar ist, wobei die Rampe aus einer Unterbringungsposition in eine Gebrauchsposition bringbar ist derart, daß sie ein Einfahren des Rollstuhlfahrers durch die, hintere Seitentür des Fahrzeuges gewährleistet, daß der Rollstuhl in einem Winkel von im wesentlichen 90° zur Fahrtrichtung im Fahrzeug positioniert wird und zum Schutz der sich im Rollstuhl befindlichen Person im hinteren Fahrzeugbereich ein oder mehrere Airbags integriert sind
und/oder
- daß mindestens ein mit Gurten versehener umklappbarer Kindersitz entgegen der Fahrtrichtung in der Rückenlehne des an der Rückseite der Trennwand angeordneten Klappsitzes angeordnet ist
und/oder
- daß der Beifahrersitz zwischen einer Sitzposition, die geeignet ist, einen Fahrgast aufzunehmen und einer Beladeposition veränderbar ist, so daß im Beifahrerbereich ein Stauraum zum Beladen erzeugt wird, wobei der Stauraum bedarfsweise mit einer Abdeckung versehbar ist.

2. Fahrzeug zur Personenbeförderung nach Anspruch 1, **dadurch gekennzeichnet,** daß die Rampe von einer Unterbringungsposition in eine Gebrauchsposition bringbar und daß ein bestehender Höhenunterschied von der Anlage- oder Austrittsposition der Rampe am Fahrzeug bis zur Oberkante der Schwelle der Seitentür durch geeignete Mittel ausgleichbar ist.

3. Fahrzeug zur Personenbeförderung nach Anspruch 1 oder 2, **dadurch gekennzeichnet,** daß die Mittel zum Ausgleich des Höhenunterschiedes in Form einer Hubeinrichtung ausgebildet sind.

4. Fahrzeug zur Personenbeförderung nach Anspruch 1 oder 2, **dadurch gekennzeichnet,** daß die Mittel zum Ausgleich des Höhenunterschiedes in Form einer bis zur Rampe laufenden und andererseits bis zum Boden des Fahrgastinnenraumes übergreifenden Ausgleichsschiene ausgebildet sind.

5. Fahrzeug zur Personenbeförderung nach einem der Ansprüche von 1 bis 4, **dadurch gekennzeichnet,** daß die Rampe im Fahrzeuginnenraum angeordnet und aus diesem ausfahrbar ist.

6. Fahrzeug zur Personenbeförderung nach einem der Ansprüche von 1 bis 5, **dadurch gekennzeichnet,** daß die Rampe im Bodenbereich des Fahrzeuges integriert und über ein Schienensystem ausfahrbar ist.

7. Fahrzeug zur Personenbeförderung nach einem der Ansprüche von 1 bis 6, **dadurch gekennzeichnet,** daß die Rampe teleskopartig in ihrer Länge veränderbar ist.

8. Fahrzeug zur Personenbeförderung nach einem der Ansprüche von 1 bis 7, **dadurch gekennzeichnet,** daß die Rampe in Form von zwei teleskopartig in der Länge veränderbaren Schienen ausgebildet ist, wobei deren Abstand entsprechend der Spurweite des Rollstuhls gewählt wird.

9. Fahrzeug zur Personenbeförderung nach einem der Ansprüche von 1 bis 8, **dadurch gekennzeichnet,** daß die Teleskopschienen in Nichtgebrausstellung auf ihre kleinste Länge zusammengeschoben sind und an der inneren Seitenwand positioniert werden.

10. Fahrzeug nach einem der Ansprüche von 1 bis 9, **dadurch gekennzeichnet,** daß eine Teleskopschiene links und die andere Teleskopschiene rechts von der Tür im Innenraum des Fahrzeuges posotionierbar ist.

11. Fahrzeug nach einem der Ansprüche von 1 bis 10**, dadurch gekennzeichnet,** daß die Teleskopschienen über mindestens eine am Boden des Fahrzeuges angeordnete Führungsschiene aus der Unterbringungsposition in die Gebrauchsposition bringbar sind.

12. Fahrzeug nach einem der Ansprüche von 1 bis 11, **dadurch gekennzeichnet,** daß die Teleskopschienen in der Gebrauchsposition positionierbar sind.

13. Fahrzeug nach einem der Ansprüche von 1 bis 11, **dadurch gekennzeichnet,** daß die Führungsschiene parallel zum Schweller der hinteren Seitentür angeordnet ist.

14. Fahrzeug nach einem der Ansprüche von 1 bis 12, **dadurch gekennzeichnet,** daß die Führungsschiene an der in Richtung zum Fahrgastraum liegenden Seite des Schwellers angeordnet ist.

15. Fahrzeug zur Personenbeförderung nach einem der Ansprüche von 1 bis 14, **dadurch gekennzeichnet,** daß die Rampe an ihrer in Richtung zum Fahrzeug weisenden Seite eine zum Fahrzeugboden reichende Ausgleichsschiene aufweist.

16. Fahrzeug zur Personenbeförderung nach einem der Ansprüche von 1 bis 19, **dadurch gekennzeichnet,** daß der Rollstuhl nach Einfahren in das Fahrzeug durch geeignete Mittel in seiner Lage arretierbar ist.

17. Fahrzeug zur Personenbeförderung nach einem der Ansprüche von 1 bis 16, **dadurch gekennzeichnet,** daß im Bereich der Trennwand ein oder mehrere Airbags angeordnet sind.

18. Fahrzeug zur Personenbeförderung nach einem der Ansprüche von 1 bis 17, **dadurch gekennzeichnet,** daß der Beifahrersitz unter dem Armaturenbrett der Beifahrerseite verstaubar ist.

19. Fahrzeug zur Personenbeförderung nach einem der Ansprüche von 1 bis 18, **dadurch gekennzeichnet,** daß die Sitzfläche des Beifahrersitzes in Richtung zur Rückenlehne nach oben klappbar ist und daß der gesamte Sitz nach dem Hochklappen des Sitzbereiches in einer dafür geeigneten Laufschiene unter das Armaturenbrett schiebbar und in dieser Position arretierbar ist.

20. Fahrzeug zur Personenbeförderung nach einem der Ansprüche von 1 bis 18, **dadurch gekennzeichnet,** daß die Rückenlehne in Richtung zur Sitzfläche klappbar ist, so daß sie im wesentlichen bündig daran anliegt und daß der Sitz in einer in Fahrtrichtung im Bodenbereich angeordneten Schwenkachse in Richtung zum Armaturenbrett schwenkbar und bedarfsweise nach vorn schiebbar und in der Schwenkposition unter dem Armaturenbrett arretierbar ist.

21. Fahrzeug zur Personenbeförderung nach einem der Ansprüche von 1 bis 17, **dadurch gekennzeichnet,** daß Lehne und Sitzfläche des Beifahrersitzes getrennt ausgebildet sind, und daß zu Erzeugung des Stauraums die Lehne weitmöglichst an die Rückwand schiebbar und der Sitz einzeln unter dem Armaturenbrett verstaubar ist.

22. Fahrzeug nach einem der Ansprüche von 1 bis 17, **dadurch gekennzeichnet,** daß der Beifahrersitz als Klappsitz ausgebildet ist, bei welchem in der Beladeposition die Sitzfläche nach oben geklappt ist.

23. Fahrzeug zur Personenbeförderung nach einem der Ansprüche von 1 bis 22**, dadurch gekennzeichnet,** daß die Abdeckung des Stauraums durch eine Plane erfolgt.

24. Fahrzeug zur Personenbeförderung nach Anspruch 23, **dadurch gekennzeichnet,** daß die Plane die mit einem Ende an der Trennwand und mit dem gegenüberliegenden Ende entgegen einer Rückstellkraft aus ihrer Ausgangsposition am Armaturenbrett oder an dem unter dem Armaturenbrett verstauten Sitz befestigbar ist und nach dem Lösen der Befestigung selbsttätig durch die Rückstellkraft in die Ausgangsposition zurückgelangt.

25. Fahrzeug zur Personenbeförderung nach einem der Ansprüche von 1 bis 24, **dadurch gekennzeichnet,** daß an der Trennwand ein aus einer Nichtgebrauchslage mit seiner Platte nach oben in eine Gebrauchslage klappbarer Tisch angeordnet ist.

26. Fahrzeug nach Anspruch 25**, dadurch gekennzeichnet,** daß die Platte über eine Gasfeder klappbar ist und zwei Ebenen aufweist, wobei die erste Ebene nach dem Hochklappen in die Gebrauchslage in ihrer Lage fest ist und die zweite Ebene in ihrer Lage zur ersten Ebene veränderbar ist.
